# EUROPÄISCHE PATENTSCHRIFT

(11) **EP 4 514 497 B1**
(45) Veröffentlichungstag und Bekanntmachung des Hinweises auf die Patenterteilung: **06.05.2026**
(21) Anmeldenummer: 23709191.3
(22) Anmeldetag: 03.03.2023
(51) Int. Cl.: B01D 29/21, B01D 29/23, B01D 29/54, B01D 35/147

(54) **FILTERELEMENT MIT VENTILEINRICHTUNG**
FILTER ELEMENT WITH VALVE DEVICE
ÉLÉMENT FILTRANT AVEC DISPOSITIF DE VANNE

(30) Priorität: 25.04.2022 DE 102022109929
(43) Veröffentlichungstag der Anmeldung: 05.03.2025
(73) Patentinhaber: MANN+HUMMEL GmbH, 71636 Ludwigsburg (DE)
(72) Erfinder: MÄRTZ, Mike, 67376 Harthausen (DE); VALOUSEK, Tomá, 66467 Syrovice (CZ)
(74) Vertreter: Mann + Hummel Intellectual Property
(86) Internationale Anmeldenummer: PCT/EP2023/055386
(87) Internationale Veröffentlichungsnummer: WO 2023/208455

(56) Entgegenhaltungen:
- EP-A1- 1 199 093
- DE-A1- 102013 017 667
- DE-A1- 2 256 436
- JP-A- H09 144 522

## Beschreibung

### Technisches Gebiet

Die Erfindung betrifft ein Filterelement zum Filtern eines Fluids, insbesondere einer Flüssigkeit, insbesondere zum Filtern von Hydraulikflüssigkeit oder Motoröl, mit einem hohlzylinderförmigen, radial durchströmbaren Filterbalg.

### Stand der Technik

DE 10 2010 054 349 A1 offenbart ein auswechselbares Filterelement zur Filterung einer Flüssigkeit, insbesondere zur Filterung des Öls eines Ölkreislaufs einer Brennkraftmaschine. Das Filterelement umfasst einen Filterbalg, für den Durchfluss der zu filternden Flüssigkeit sowie ein zylindrisches Mittelrohr zur Stützung des Filtereinsatzes. An dem Mittelrohr ist ein Sieb angebracht, das eine endseitige Öffnung des Filterelements verschließt, und bei dem das Sieb einen Siebkörper aufweist, der entlang seines Umfangs dichtend mit dem Mittelrohr oder der Endscheibe verbunden ist.

US 2013327429 A1 offenbart ein Bypassventil mit einstellbarem Strömungswiderstand für eine von einem flüssigen Medium durchströmte Vorrichtung, beispielsweise ein Filterelement. Das Ventil umfasst einen Sitz und einen Körper, der geschlossen vorgespannt ist und der durch eine Fluidmedium-Druckdifferenz zwischen der Einström- und der Ausströmseite des Ventils in Öffnungsrichtung bewegbar ist, wenn die Druckdifferenz einen Schwellenwert überschreitet. Ein Bypass-Strömungsweg verbindet die Einströmseite mit der Ausströmseite durch den Sitz. Das Umgehungsventil umfasst ein Sieb, das in dem Umgehungsströmungsweg angeordnet ist. Der Ventilkörper hat zwei unterschiedliche Öffnungsstellungen, die von der Druckdifferenz des Fluidmediums abhängen. Der gesamte Querschnitt des Bypass-Strömungswegs ist in einer ersten Ventilkörper-Öffnungsstellung mit einer geringeren Druckdifferenz von dem Sieb bedeckt und in einer zweiten Ventilkörper-Öffnungsstellung mit einer größeren Druckdifferenz mit einem siebfreien Bypass-Strömungswegquerschnitt freigegeben.

Aus der EP 1 199 093 A1 ist ein Filterelement mit einem Bypassventil bekannt, wobei das Filterelement ein Siebelement zur Abstützung der Schließfeder des Ventils aufweist. Weitere Filterelemente mit Bypassventil sind aus der JP H09 144 522 A und der DE 22 56 436 A1 bekannt.

### Offenbarung der Erfindung

Eine Aufgabe der Erfindung ist es, ein kostengünstiges Filterelement mit einer Ventilvorrichtung und einem Sieb zu schaffen.

Die vorgenannte Aufgabe wird nach einem Aspekt der Erfindung gelöst von einem Filterelement zum Filtern eines Fluids, insbesondere einer Flüssigkeit, umfassend wenigstens einen hohlzylinderförmigen, radial durchströmbaren Filterbalg, welcher auf einem Mittelrohr mit einer Längsachse angeordnet ist und welcher von einer radial außen liegenden Rohfluidseite zu einer radial innen liegenden Reinfluidseite von dem Fluid durchströmbar ist, wobei der Filterbalg an einer ersten Stirnseite von einer ersten Endscheibe und an einer zweiten Stirnseite von einer zweiten Endscheibe abgeschlossen ist, wobei die erste Endscheibe eine Öffnung mit einer Ventileinrichtung aufweist, die innerhalb des Mittelrohrs angeordnet ist und welche durch einen hydraulischen Druck von der Rohfluidseite her öffenbar ist, wobei die Ventileinrichtung einen Ventilkörper und einen Ventilkäfig sowie ein Sieb aufweist, wobei der Ventilkörper in dem Ventilkäfig entlang der Längsachse bewegbar ist und in einem drucklosen Zustand mittels einer Feder gegen einen in dem Ventilkäfig angeordneten Ventilsitz gepresst ist, wobei das Sieb an dem Ventilkäfig angeordnet ist und das Sieb einen Innenraum der Ventileinrichtung von der Reinfluidseite trennt, wobei der Ventilkäfig an einem mit dem Mittelrohr verbundenen Stützkörper angeordnet ist.

Günstige Ausgestaltungen und Vorteile der Erfindung ergeben sich aus den weiteren Ansprüchen, der Beschreibung und der Zeichnung.

Es wird nach einem Aspekt der Erfindung ein Filterelement zum Filtern eines Fluids, insbesondere einer Flüssigkeit, vorgeschlagen, umfassend wenigstens einen hohlzylinderförmigen, radial durchströmbaren Filterbalg, welcher auf einem Mittelrohr mit einer Längsachse angeordnet ist und welcher von einer radial außen liegenden Rohfluidseite zu einer radial innen liegenden Reinfluidseite von dem Fluid durchströmbar ist. Der Filterbalg ist an einer ersten Stirnseite von einer ersten Endscheibe und an einer zweiten Stirnseite von einer zweiten Endscheibe abgeschlossen. Die erste Endscheibe weist eine Öffnung mit einer Ventileinrichtung auf, die innerhalb des Mittelrohrs angeordnet ist, und welche durch einen hydraulischen Druck von der Rohfluidseite her öffenbar ist. Die Ventileinrichtung weist einen Ventilkörper und einen Ventilkäfig sowie ein Sieb auf, wobei der Ventilkörper in dem Ventilkäfig entlang der Längsachse bewegbar ist und in einem drucklosen Zustand mittels einer Feder gegen einen in dem Ventilkäfig angeordneten Ventilsitz gepresst ist. Das Sieb ist an dem Ventilkäfig angeordnet und trennt einen Innenraum der Ventileinrichtung von der Reinfluidseite. Der Ventilkäfig ist an einem mit dem Mittelrohr verbundenen Stützkörper angeordnet.

Vorteilhaft trennt die Ventileinrichtung die Rohfluidseite von der Reinfluidseite des Filterelements.

Das Filterelement kann wechselbar in einem Filtergehäuse oder fest in einem sogenannten Spin-on Filtersystem verbaut sein. Das Filterelement umfasst einen Filterbalg, zwei Endscheiben, ein Mittelrohr, sowie eine Ventileinrichtung als Bypassventil, welche gleichzeitig eine Sicherheitssiebbaugruppe mit einem Sieb bildet. Das Filterelement wird in radialer Richtung von außen nach innen von dem zu filternden Fluid durchströmt. Ab einem definierten Differenzdruck öffnet das Bypassventil. Dabei wird ein Ventilkörper durch den Fluiddruck von einem Dichtsitz abgehoben und gegen eine Spiralfeder gedrückt. Das Sieb aus Gewebe ist zylindrisch und kann in einem Ventilkäfig während eines Gussprozesses wenigstens teilweise umspritzt hergestellt sein.

Das Sieb kann aus einem üblichen Siebgewebe hergestellt sein. So sind Kunststoffsiebe oder Metallsiebe möglich. Auch kann beispielsweise ein Vlies eingesetzt werden. Eine Maschenweite kann vorteilhaft beispielsweise zwischen 100 µm und 500 µm liegen.

Durch die Integration von Ventileinrichtung und Sieb kann das Filterelement vorteilhaft kostengünstiger hergestellt werden, da Klebeprozesse günstiger mit weniger Materialeinsatz durchgeführt werden können. Günstigerweise können Bauteile gespart bzw. kostengünstiger hergestellt werden. Durch Steckverbindungen oder Rastverbindungen der Ventileinrichtung mit dem Mittelrohr und/oder der Endscheibe als Verbindungsprozesse kann eine Wiederverwendbarkeit von Bauteilen erreicht werden. Bauteile sind leichter zugänglich, auch dadurch lassen sich Kosten beim Fertigungsprozess einsparen.

Gemäß einer günstigen Ausgestaltung des Filterelements kann der Stützkörper mit dem Mittelrohr einteilig ausgebildet sein. Dadurch lassen sich Fertigungskosten bei der Herstellung beider Bauteile günstiger gestalten.

Gemäß einer günstigen Ausgestaltung des Filterelements kann der Ventilkäfig mit dem Mittelrohr und/oder dem Stützkörper mittels einer Rastverbindung und/oder einer Schnappverbindung und/oder einer Steckverbindung und/oder einer Schraubverbindung verbunden sein. Durch Verwendung solcher Verbindungsprozess kann der Ventilkäfig auch wieder zerstörungsfrei demontiert werden, wodurch eine Wiederverwendbarkeit im Wartungsfall gewährleistet ist.

Gemäß einer günstigen Ausgestaltung des Filterelements kann der Ventilkäfig auf seiner Innenseite Führungselemente zur axialen Führung des Ventilkörpers aufweisen. Auf diese Weise kann vorteilhaft eine sichere Funktion des Ventilkörpers erreicht werden.

Gemäß einer günstigen Ausgestaltung des Filterelements kann ein Spalt zwischen dem Sieb und einem Außendurchmesser des Ventilkörpers ausgebildet sein. Dadurch kann sichergestellt werden, dass der Bewegungsspielraum des Ventilkörpers für seine Funktion durch das Sieb nicht beeinträchtigt wird.

Gemäß einer günstigen Ausgestaltung des Filterelements kann der Ventilkäfig in die Öffnung der ersten Endscheibe gepresst und/oder geklebt und/oder geschraubt sein. Auf diese Weise lässt sich eine sichere und dauerhafte Verbindung des Ventilkäfigs mit der ersten Endscheibe erreichen.

Gemäß einer günstigen Ausgestaltung des Filterelements kann der Ventilkäfig mit der ersten Endscheibe einteilig ausgebildet sein. Dadurch lassen sich Endscheibe und Ventilkäfig in einem Fertigungsschritt, beispielsweise durch Kunststoffspritzgießen, günstig produzieren. Als Werkstoff kann vorteilhaft beispielsweise Polyamid (PA) eingesetzt werden. Für höhere Festigkeit kann auch ein faserverstärkter Kunststoff eingesetzt werden.

Gemäß einer günstigen Ausgestaltung des Filterelements kann der Filterbalg und/oder das Mittelrohr mit den Endscheiben verklebt sein. Insbesondere kann der Filterbalg und/oder das Mittelrohr mittels eines Flüssigklebers in den aus einem harten Kunststoff - beispielsweise PA - bestehenden Endscheiben vergossen sein. Ein solcher Klebeprozess gewährleistet eine sichere und zuverlässige Verbindung von Filterbalg und/oder Mittelrohr mit den Endscheiben, welcher auch noch einen kostengünstigen Fertigungsprozess darstellt.

Gemäß einer günstigen Ausgestaltung des Filterelements kann das Filterelement mit der Ventileinrichtung entgegen einer Schwerkraftrichtung betreibbar sein. So kann das Filterelement je nach Anwendung auch auf dem Kopf stehend betrieben werden.

Gemäß einer günstigen Ausgestaltung des Filterelements kann wenigstens die erste Endscheibe als Folienendscheibe ausgebildet sein und das Mittelrohr und/oder der Ventilkäfig können mittels einer Steckverbindung mit der ersten Endscheibe verbunden sein. Folienendscheiben stellen kostengünstige Alternative zur Herstellung von Kunststoffendscheiben in Filterelementen dar.

Gemäß einer günstigen Ausgestaltung des Filterelements kann die Steckverbindung lösbar sein. Damit kann vorteilhaft eine Wiederverwendung der einzelnen Bauteile gewährleistet werden.

Gemäß einer günstigen Ausgestaltung des Filterelements kann der Ventilkäfig als Hohlzylinder mit Durchgangsöffnungen ausgebildet sein, welche mit dem Sieb abgedeckt sind. So kann, wenn der Ventilkörper bei Fluidüberdruck den Ventildurchgang freigibt, das Fluid auf günstige Weise durch das Sieb gefiltert in den Innenraum des Filterelements strömen, welcher den Reinfluidbereich des Filterelements darstellt.

Gemäß einer günstigen Ausgestaltung des Filterelements kann der Stützkörper in der Axialrichtung verlaufende Rippen aufweisen, welche zur Führung des Ventilkäfigs dienen. Dadurch ist eine sichere Montage des Ventilkäfigs an dem Stützkörper möglich, da der Ventilkäfig bei der Montage durch die Rippen beispielsweise vorteilhaft zentriert werden kann.

Gemäß einer günstigen Ausgestaltung des Filterelements kann der Stützkörper einen umlaufenden Absatz als Federlager aufweisen, welcher zur Abstützung der Feder bei bestimmungsgemäß montierter Ventileinrichtung dient. Damit kann ein sicherer Sitz der Feder im Betrieb des Filterelements erreicht werden, wodurch die zuverlässige Funktion der Ventileinrichtung gewährleistet werden kann.

Gemäß einer günstigen Ausgestaltung des Filterelements kann der Stützkörper über radial verlaufende Rippen mit dem Mittelrohr verbunden sein. Durch die Verbindung des Stützkörpers über einzelne Rippen zum Mittelrohr kann erreicht werden, dass ein freier Fluidstrom des durch das Sieb gefilterten Fluids in den Reinfluidbereich des Filterelements gegeben ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine teilweise geschnittene Seitenansicht eines Filterelements zum Filtern eines Fluids, insbesondere einer Flüssigkeit, nach einem Ausführungsbeispiel der Erfindung;
- Figur 2: eine geschnittene isometrische Darstellung des Filterelements nach Figur 1;
- Figur 3: eine vergrößerte Darstellung einer Ventileinrichtung des Filterelements ohne Filterbalg; und
- Figur 4: ein Ventilkäfig des Filterelements nach Figur 1 in isometrischer Darstellung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

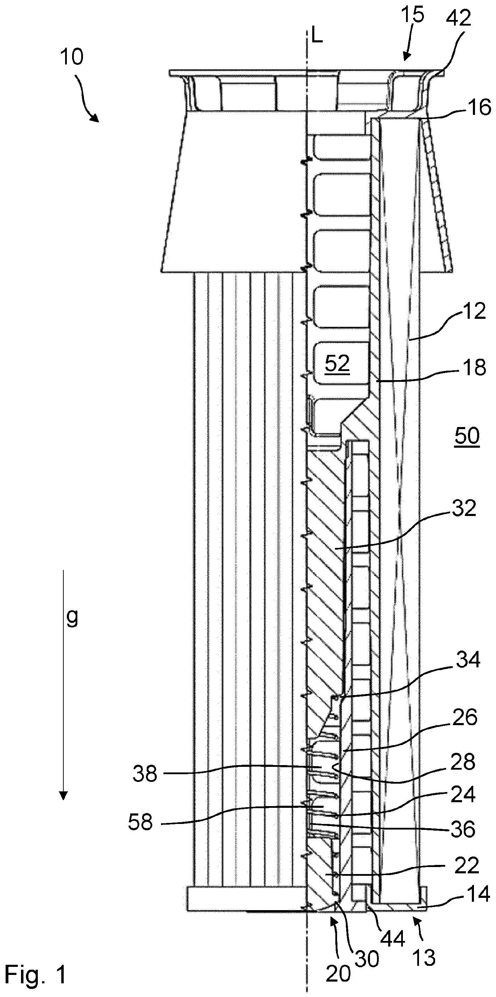

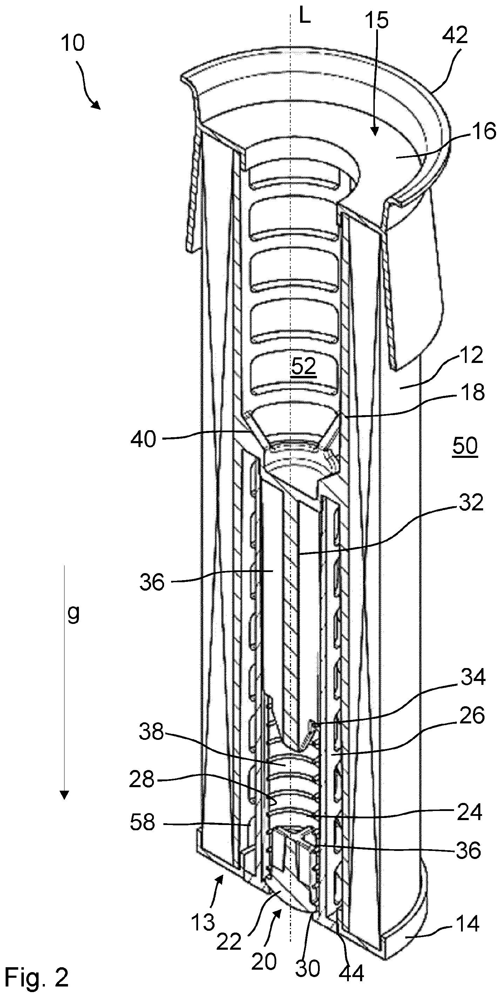

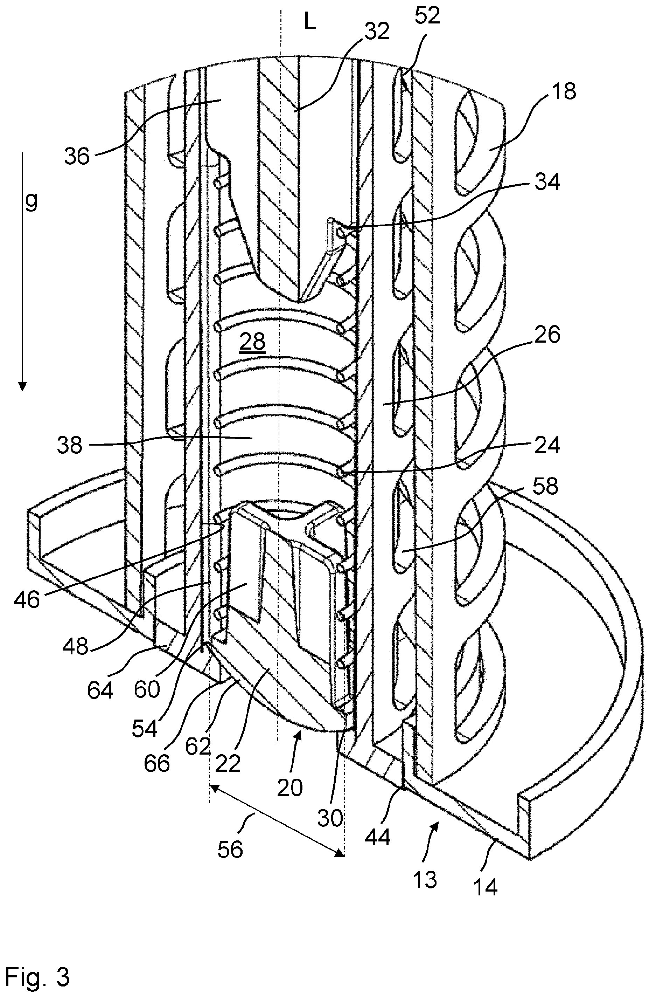

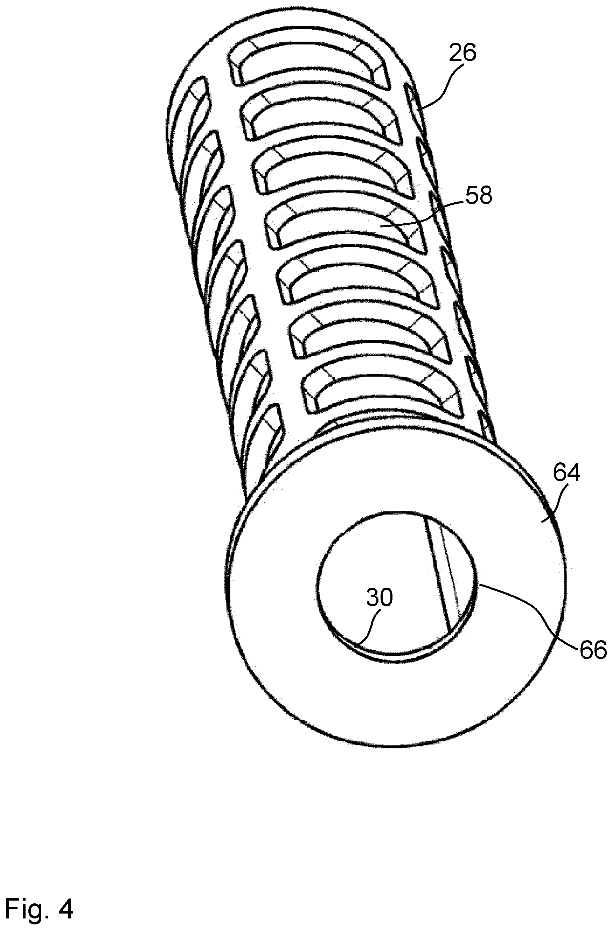

Figur 1 zeigt eine teilweise geschnittene Seitenansicht eines Filterelements 10 zum Filtern eines Fluids, insbesondere einer Flüssigkeit, nach einem Ausführungsbeispiel der Erfindung, während in Figur 2 eine geschnittene isometrische Darstellung des Filterelements 10 nach Figur 1 gezeigt ist. Figur 3 zeigt dazu eine vergrößerte Darstellung einer Ventileinrichtung 20 des Filterelements 10 ohne Filterbalg 12. In Figur 4 ist ein Ventilkäfig 26 des Filterelements 10 nach Figur 1 in isometrischer Darstellung gezeigt.

Das Filterelement 10 umfasst einen hohlzylinderförmigen, radial durchströmbaren Filterbalg 12, welcher auf einem Mittelrohr 18 mit einer Längsachse L angeordnet ist. Der Filterbalg 12 wird im bestimmungsgemäßen Betrieb von einer radial außen liegenden Rohfluidseite 50 zu einer radial innen liegenden Reinfluidseite 52 von dem Fluid durchströmt. Der Filterbalg 12 ist an einer ersten Stirnseite 13 von einer ersten Endscheibe 14 und an einer zweiten Stirnseite 15 von einer zweiten Endscheibe 16 abgeschlossen. Die zweite Endscheibe 16 weist eine kragenförmige Auswölbung 42 auf, welche beim Einbau in ein, nicht dargestelltes, Filtergehäuse eine Abdichtung zwischen der Rohfluidseite 50 und der Reinfluidseite 52 sicherstellt.

Die erste Endscheibe 14 weist eine Öffnung 44 mit einer Ventileinrichtung 20 auf, die innerhalb des Mittelrohrs 18 angeordnet ist. Die Ventileinrichtung 20 weist einen Ventilkörper 22 und einen Ventilkäfig 26 sowie ein Sieb 28 auf. Der Ventilkörper 22 kann sich in dem Ventilkäfig 26 entlang der Längsachse L bewegen und ist in einem drucklosen Zustand mittels einer Feder 24 gegen einen in dem Ventilkäfig 26 angeordneten Ventilsitz 30 gepresst. Damit stellt die Ventileinrichtung 20 ein Rückschlagventil dar.

Der Ventilkörper 22 weist einen Ventilkegel 62 auf, welcher gegen den Ventilsitz 30 abdichtet und welcher mit vier flügelartigen Rippen 60, die kreuzförmig angeordnet sind, verbunden ist, wie insbesondere in Figur 3 erkennbar ist. Der Ventilkegel 62 kann beispielsweise als Teil eines Kegelstumpfs oder als Teil einer Kugelkalotte ausgebildet sein, um eine zuverlässige Abdichtung am Ventilsitz 30 zu gewährleisten.

Der Ventilsitz 30 ist an der zum Innenraum 38 der Ventileinrichtung 20 gerichteten Seite einer Öffnung 66 einer Abschlussplatte 64 des Ventilkäfigs 26 angeordnet, wie in den Figuren 3 und 4 erkennbar.

Das Sieb 28 ist an dem Ventilkäfig 26 angeordnet und trennt einen Innenraum 38 der Ventileinrichtung 20 von der Reinfluidseite 52. Der Ventilkäfig 26 ist an einem mit dem Mittelrohr 18 verbundenen Stützkörper 32 angeordnet.

Die Ventileinrichtung 20 trennt die Rohfluidseite 50 von der Reinfluidseite 52 und kann durch einen hydraulischen Druck von der Rohfluidseite 50 her geöffnet werden. Die Ventileinrichtung 20 funktioniert so als Bypass-Ventil, falls der hydraulische Druck auf der Rohfluidseite 50 zu groß wird. In dem Fall öffnet die Ventileinrichtung 20 und Rohfluid kann in den Innenraum 38 der Ventileinrichtung 20 strömen.

Der Stützkörper 32 kann mit dem Mittelrohr 18 einteilig ausgebildet sein, wie bei dem im Schnitt in Figur 1 dargestellten Ausführungsbeispiel erkennbar ist und mit dem Mittelrohr 18 über radial verlaufende Rippen 40 verbunden sein, wie in Figur 2 erkennbar.

Der Ventilkäfig 26, der als Hohlzylinder mit Durchgangsöffnungen 58 ausgebildet ist, wie insbesondere in den Figuren 3 und 4 erkennbar ist, weist auf seiner Innenseite 46 das Sieb 28 auf. Dabei können zumindest die Durchgangsöffnungen 58 mit dem Sieb 28 abgedeckt sein.

Der Ventilkäfig 26 kann bei der Montage der Ventileinrichtung 20 mit eingelegtem Ventilkörper 22 und darüber angeordneter Feder 24 durch die Öffnung 44 der ersten Endscheibe 14 auf den Stützkörper 32, welcher zapfenförmig ausgebildet ist, aufgesteckt werden.

Der Stützkörper 32 kann dafür, wie bei dem dargestellten Ausführungsbeispiel insbesondere in Figur 3 erkennbar, einen umlaufenden Absatz 34 als Federlager aufweisen, welcher zur Abstützung der Feder 24 bei bestimmungsgemäß montierter Ventileinrichtung 20 dient. Durch den Absatz 34 kann die Feder 24 vorteilhaft kürzer ausgebildet sein.

Weiter kann der Stützkörper 32 in der Axialrichtung L verlaufende Rippen 36 aufweisen, welche zur Führung des Ventilkäfigs 26 beim Aufstecken dienen und außerdem eine feste Fixierung des Ventilkäfigs 26 in radialer Richtung darstellen, was für einen robusten Betrieb des Filterelements von Vorteil ist. Das dargestellte Ausführungsbeispiel weist beispielsweise vier Rippen 40 auf, welche im Querschnitt kreuzförmig angeordnet sind. In den Darstellungen der Figuren 1 bis 3 sind jeweils nur zwei Rippen 40 erkennbar. Eine dritte Rippe 40 ist angeschnitten. Die vierte Rippe 40 ist in den Darstellungen nicht zu sehen.

Danach kann der Ventilkäfig 26 mit dem Mittelrohr 18 und/oder dem Stützkörper 32 wenigstens mittels einer Rastverbindung und/oder einer Schnappverbindung und/der einer Steckverbindung und/oder einer Schraubverbindung verbunden werden.

Dabei kann der Ventilkäfig 26 in die Öffnung 44 der ersten Endscheibe 14 gepresst und/oder geklebt und/oder geschraubt werden.

In einer alternativen Ausführungsform kann der Ventilkäfig 26 mit der ersten Endscheibe 14 einteilig ausgebildet sein.

Der Ventilkäfig 26 weist auf seiner Innenseite 46 Führungselemente 48 zur axialen Führung des Ventilkörpers 22 auf. Diese Führungselemente 48, welche als Rippen ausgebildet sein können, können auch vorteilhaft zur Versteifung des Ventilkäfigs 26 dienen. Außerdem kann so günstigerweise zwischen dem Sieb 28 und einem Außendurchmesser 56 des Ventilkörpers 22 ein Spalt 54 ausgebildet sein.

Der Filterbalg 12 und/oder das Mittelrohr 18 können vorteilhaft mit den Endscheiben 14, 16, welche beispielsweise aus Kunststoff ausgebildet sein können, verklebt sein. Insbesondere können beispielsweise der Filterbalg 12 und/oder das Mittelrohr 18 mittels eines Flüssigklebers in den Endscheiben 14, 16 vergossen sein. Filterbalg 12 und Mittelrohr 18 können beispielsweise auch vorteilhaft mit Polyurethan (PU) vergossen sein, wenn die Endscheiben 14, 16 als feste Endscheiben 14, 16 ausgebildet sind.

In einem alternativen Ausführungsbeispiel kann wenigstens die erste Endscheibe 14 auch als Folienendscheibe ausgebildet sein. Dabei kann das Mittelrohr 18 und/oder der Ventilkäfig 26 mittels einer Steckverbindung mit der wenigstens ersten Endscheibe 14 verbunden sein. Bei einer solchen Ausführung entfallen die starren Endscheiben 14, 16 des in Figuren 1 bis 3 dargestellten Ausführungsbeispiels.

Insbesondere können die Steckverbindungen von Mittelrohr 18 und/oder Ventilkäfig 26 lösbar ausgebildet sein. Dadurch kann vorteilhaft eine Wiederverwendung dieser inneren Bauteile des Filterelements 10 im Wartungsfall gewährleistet werden, beispielsweise bei einem Austausch auf Grund eines beladenen Filterbalgs 12.

Bei den in den Figuren 1 bis 4 dargestellten Ausführungsbeispielen ist das Filterelement 10 jeweils so ausgerichtet, dass die Ventileinrichtung 20 in Schwerkraftrichtung g unten angeordnet ist. Prinzipiell ist jedoch auch möglich, dass das Filterelement 10 mit der Ventileinrichtung 20 entgegen einer Schwerkraftrichtung g betrieben wird.

### Bezugszeichen

- 10: Filterelement
- 12: Filterbalg
- 13: erste Stirnseite
- 14: erste Endscheibe
- 15: zweite Stirnseite
- 16: zweite Endscheibe
- 18: Mittelrohr
- 20: Ventileinrichtung
- 22: Ventilkörper
- 24: Feder
- 26: Ventilkäfig
- 28: Sieb
- 30: Ventilsitz
- 32: Stützkörper
- 34: Absatz
- 36: Rippe
- 38: Innenraum
- 40: Rippe
- 42: kragenförmige Auswölbung
- 44: Öffnung
- 46: Innenseite
- 48: Führungselement
- 50: Rohfluidseite
- 52: Reinfluidseite
- 54: Spalt
- 56: Außendurchmesser
- 58: Durchgangsöffnung
- 60: Flügel
- 62: Ventilkegel
- 64: Abschlussplatte
- 66: Öffnung
- L: Axialrichtung
- g: Schwerkraftrichtung

## Patentansprüche

1. Filterelement (10) zum Filtern eines Fluids, insbesondere einer Flüssigkeit, umfassend wenigstens einen hohlzylinderförmigen, radial durchströmbaren Filterbalg (12), welcher auf einem Mittelrohr (18) mit einer Längsachse (L) angeordnet ist und welcher von einer radial außen liegenden Rohfluidseite (50) zu einer radial innen liegenden Reinfluidseite (52) von dem Fluid durchströmbar ist,
wobei der Filterbalg (12) an einer ersten Stirnseite (13) von einer ersten Endscheibe (14) und an einer zweiten Stirnseite (15) von einer zweiten Endscheibe (16) abgeschlossen ist,
wobei die erste Endscheibe (14) eine Öffnung (44) mit einer Ventileinrichtung (20) aufweist, die innerhalb des Mittelrohrs (18) angeordnet ist, und welche durch einen hydraulischen Druck von der Rohfluidseite (50) her öffenbar ist,
wobei die Ventileinrichtung (20) einen Ventilkörper (22) und einen Ventilkäfig (26) sowie ein Sieb (28) aufweist, wobei der Ventilkörper (22) in dem Ventilkäfig (26) entlang der Längsachse (L) bewegbar ist und in einem drucklosen Zustand mittels einer Feder (24) gegen einen in dem Ventilkäfig (26) angeordneten Ventilsitz (30) gepresst ist,
wobei das Sieb (28) an dem Ventilkäfig (26) angeordnet ist und das Sieb (28) einen Innenraum (38) der Ventileinrichtung (20) von der Reinfluidseite (52) trennt,
**dadurch gekennzeichnet, dass** der Ventilkäfig (26) an einem mit dem Mittelrohr (18) verbundenen Stützkörper (32) angeordnet ist.

2. Filterelement nach Anspruch 1, wobei der Stützkörper (32) mit dem Mittelrohr (18) einteilig ausgebildet ist.

3. Filterelement nach Anspruch 1 oder 2, wobei der Ventilkäfig (26) mit dem Mittelrohr (18) und/oder dem Stützkörper (32) wenigstens mittels einer Rastverbindung und/oder einer Schnappverbindung und/oder einer Steckverbindung und/oder einer Schraubverbindung verbunden ist.

4. Filterelement nach einem der vorhergehenden Ansprüche, wobei der Ventilkäfig (26) auf seiner Innenseite (46) Führungselemente (48) zur axialen Führung des Ventilkörpers (22) aufweist.

5. Filterelement nach einem der vorhergehenden Ansprüche, wobei ein Spalt (54) zwischen dem Sieb (28) und einem Außendurchmesser (56) des Ventilkörpers (22) ausgebildet ist.

6. Filterelement nach einem der vorhergehenden Ansprüche, wobei der Ventilkäfig (26) in die Öffnung (44) der ersten Endscheibe (14) gepresst und/oder geklebt und/oder geschraubt ist.

7. Filterelement nach einem der Ansprüche 1 bis 5, wobei der Ventilkäfig (26) mit der ersten Endscheibe (14) einteilig ausgebildet ist.

8. Filterelement nach einem der vorhergehenden Ansprüche, wobei wenigstens eine der Endscheiben (14, 16) aus Kunststoff besteht und der Filterbalg (12) und/oder das Mittelrohr (18) mit der wenigstens einen aus Kunststoff bestehenden Endscheibe (14, 16) verklebt ist, insbesondere wobei der Filterbalg (12) und/oder das Mittelrohr (18) mittels eines Flüssigklebers in der Endscheibe (14, 16) vergossen ist/sind.

9. Filterelement nach einem der vorhergehenden Ansprüche, wobei das Filterelement (10) mit der Ventileinrichtung (20) entgegen einer Schwerkraftrichtung (g) betreibbar ist.

10. Filterelement nach einem der vorhergehenden Ansprüche, wobei wenigstens die erste Endscheibe (14) als Folienendscheibe ausgebildet ist und das Mittelrohr (18) und/oder der Ventilkäfig (26) mittels einer, insbesondere lösbaren, Steckverbindung mit der ersten Endscheibe (14) verbunden sind.

11. Filterelement nach einem der vorhergehenden Ansprüche, wobei der Ventilkäfig (26) als Hohlzylinder mit Durchgangsöffnungen (58) ausgebildet ist, welche mit dem Sieb (28) abgedeckt sind.

12. Filterelement nach einem der vorhergehenden Ansprüche, wobei der Stützkörper (32) in der Axialrichtung (L) verlaufende Rippen (36) aufweist, welche zur Führung des Ventilkäfigs (26) dienen.

13. Filterelement nach einem der vorhergehenden Ansprüche, wobei der Stützkörper (32) einen umlaufenden Absatz (34) als Federlager aufweist, welcher zur Abstützung der Feder (24) bei bestimmungsgemäß montierter Ventileinrichtung (20) dient.

14. Filterelement nach einem der vorhergehenden Ansprüche, wobei der Stützkörper (32) über radial verlaufende Rippen (40) mit dem Mittelrohr (18) verbunden ist.

## Claims

1. A filter element (10) for filtering a fluid, in particular a liquid, comprising at least one hollow cylindrical filter bellows (12) through which fluid can flow radially, which is disposed on a central tube (18) with a longitudinal axis (L) and through which the fluid can flow from a radially external raw fluid side (50) to a radially internal clean fluid side (52),
wherein the filter bellows (12) is closed at a first front face (13) by a first end disc (14) and at a second front face (15) by a second end disc (16),
wherein the first end disc (14) features an opening (44) with a valve device (20) which is disposed inside the central tube (18), and which can be opened by hydraulic pressure from the raw fluid side (50),
wherein the valve device (20) features a valve body (22) and a valve housing (26) as well as a sieve (28), wherein the valve body (22) is movable in the valve housing (26) along the longitudinal axis (L) and, in a pressureless state, is pressed by means of a spring (24) against a valve seat (30) disposed in the valve housing (26),
wherein the sieve (28) is disposed on the valve housing (26) and the sieve (28) separates an interior space (38) of the valve device (20) from the clean fluid side (52), **characterized in that** the valve housing (26) is disposed on a support body (32) connected to the central tube (18).

2. The filter element according to claim 1, wherein the support body (32) is formed integrally with the central tube (18).

3. The filter element according to claim 1 or 2, wherein the valve housing (26) is connected to the central tube (18) and/or to the support body (32) at least by means of a snap-in connection and/or a snap-fit connection and/or a plug-in connection and/or a screwed connection.

4. The filter element according to one of the preceding claims, wherein the valve housing (26) features guide elements (48) on its interior side (46) for axial guidance of the valve body (22).

5. The filter element according to one of the preceding claims, wherein a gap (54) is formed between the sieve (28) and an external diameter (56) of the valve body (22).

6. The filter element according to one of the preceding claims, wherein the valve housing (26) is pressed and/or glued and/or screwed into the opening (44) of the first end disc (14).

7. The filter element according to one of the claims 1 to 5, wherein the valve housing (26) is formed integrally with the first end disc (14).

8. The filter element according to one of the preceding claims, wherein at least one of the end discs (14, 16) is made of plastic material and the filter bellows (12) and/or the central tube (18) is glued to the at least one end disc (14, 16) made of plastic material,
in particular wherein the filter bellows (12) and/or the central tube (18) is/are cast into the end disc (14, 16) by means of a liquid adhesive.

9. The filter element according to one of the preceding claims, wherein the filter element (10) can be operated with the valve device (20) against a direction of gravity (g).

10. The filter element according to one of the preceding claims, wherein at least the first end disc (14) is designed as a foil end plate and the central tube (18) and/or the valve housing (26) are connected to the first end disc (14) by means of an in particular detachable plug-in connection.

11. The filter element according to one of the preceding claims, wherein the valve housing (26) is designed as a hollow cylinder with through-openings (58) covered by the sieve (28).

12. The filter element according to one of the preceding claims, wherein the support body (32) features ribs (36) extending in the axial direction (L), which serve to guide the valve housing (26).

13. The filter element according to one of the preceding claims, wherein the support body (32) features a circumferential shoulder (34) as a spring bearing and which serves to support the spring (24) when the valve device (20) is mounted as intended.

14. The filter element according to one of the preceding claims, wherein the support body (32) is connected to the central tube (18) via radially extending ribs (40).

## Revendications

1. Élément filtrant (10) destiné à filtrer un fluide, en particulier un liquide, comprenant au moins un soufflet de filtre (12) en forme de cylindre creux, pouvant être traversé radialement, qui est disposé sur un tube central (18) avec un axe longitudinal (L) et qui peut être traversé par le fluide depuis un côté de fluide brut (50) situé radialement à l'extérieur vers un côté de fluide pur (52) situé radialement à l'intérieur,
dans lequel le soufflet de filtre (12) est fermé au niveau d'une première face frontale (13) par un premier disque d'extrémité (14) et au niveau d'une deuxième face frontale (15) par un deuxième disque d'extrémité (16),
dans lequel le premier disque d'extrémité (14) présente une ouverture (44) avec un dispositif de soupape (20) qui est disposé à l'intérieur du tube central (18) et qui peut être ouverte par une pression hydraulique provenant du côté de fluide brut (50),
dans lequel le dispositif de soupape (20) présente un corps de soupape (22) et une cage de soupape (26) ainsi qu'un tamis (28), dans lequel le corps de soupape (22) peut se déplacer dans la cage de soupape (26) le long de l'axe longitudinal (L) et est pressé à l'état sans pression au moyen d'un ressort (24) contre un siège de soupape (30) disposé dans la cage de soupape (26),
dans lequel le tamis (28) est disposé sur la cage de soupape (26) et le tamis (28) sépare un espace intérieur (38) du dispositif de soupape (20) du côté de fluide pur (52), **caractérisé en ce que** la cage de soupape (26) est disposée sur un corps de support (32) relié au tube central (18).

2. Élément filtrant selon la revendication 1, dans lequel le corps de support (32) est formé d'un seul tenant avec le tube central (18).

3. Élément filtrant selon la revendication 1 ou 2, dans lequel la cage de soupape (26) est reliée au tube central (18) et/ou au corps de support (32) au moins au moyen d'une liaison par encliquetage et/ou d'une liaison par enclenchement et/ou d'une liaison par emboîtement et/ou d'une liaison par vissage.

4. Élément filtrant selon l'une quelconque des revendications précédentes, dans lequel la cage de soupape (26) présente sur sa face intérieure (46) des éléments de guidage (48) pour le guidage axial du corps de soupape (22).

5. Élément filtrant selon l'une quelconque des revendications précédentes, dans lequel un interstice (54) est formé entre le tamis (28) et un diamètre extérieur (56) du corps de soupape (22).

6. Élément filtrant selon l'une quelconque des revendications précédentes, dans lequel la cage de soupape (26) est pressée et/ou collée et/ou vissée dans l'ouverture (44) du premier disque d'extrémité (14).

7. Élément filtrant selon l'une quelconque des revendications 1 à 5, dans lequel la cage de soupape (26) est formée d'un seul tenant avec le premier disque d'extrémité (14).

8. Élément filtrant selon l'une quelconque des revendications précédentes, dans lequel au moins l'un des disques d'extrémité (14, 16) est en matière plastique et le soufflet de filtre (12) et/ou le tube central (18) est collé au moins à l'un des disques d'extrémité (14, 16) en matière plastique,
en particulier dans lequel le soufflet de filtre (12) et/ou le tube central (18) est moulé dans le disque d'extrémité (14, 16) à l'aide d'une colle liquide.

9. Élément filtrant selon l'une quelconque des revendications précédentes, dans lequel l'élément filtrant (10) peut être actionné avec le dispositif de soupape (20) à l'encontre d'une direction de la force de gravité (g).

10. Élément filtrant selon l'une quelconque des revendications précédentes, dans lequel au moins le premier disque d'extrémité (14) est conçu comme un disque d'extrémité en film et le tube central (18) et/ou la cage de soupape (26) sont reliés au premier disque d'extrémité (14) au moyen d'une liaison par emboîtement, en particulier amovible.

11. Élément filtrant selon l'une quelconque des revendications précédentes, dans lequel la cage de soupape (26) est conçue comme un cylindre creux avec des ouvertures de passage (58) qui sont recouvertes par le tamis (28).

12. Élément filtrant selon l'une quelconque des revendications précédentes, dans lequel le corps de support (32) présente des nervures (36) s'étendant dans la direction axiale (L) et qui servent à guider la cage de soupape (26).

13. Élément filtrant selon l'une quelconque des revendications précédentes, dans lequel le corps de support (32) présente un épaulement périphérique (34) servant de support de ressort, qui sert à soutenir le ressort (24) lorsque le dispositif de soupape (20) est monté conformément à sa destination.

14. Élément filtrant selon l'une quelconque des revendications précédentes, dans lequel le corps de support (32) est relié au tube central (18) par des nervures radiales (40).
